(19) Europäisches Patentamt
European Patent Office
Office européen des brevets

(11) **EP 1 337 754 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.$^7$: **F03D 1/00**, H02J 3/18

(21) Anmeldenummer: 01998736.1

(22) Anmeldetag: **15.11.2001**

(86) Internationale Anmeldenummer:
**PCT/EP2001/013203**

(87) Internationale Veröffentlichungsnummer:
**WO 2002/044560 (06.06.2002 Gazette 2002/23)**

(54) **WINDENERGIEANLAGE BZW. WINDPARK BESTEHEND AUS EINER VIELZAHL VON WINDENERGIEANLAGE**

WIND ENERGY TURBINE AND WIND FARM CONSISTING OF A PLURALITY OF WIND ENERGY TURBINES

INSTALLATION D'ENERGIE EOLIENNE OU PARC EOLIEN CONSTITUE DE PLUSIEURS INSTALLATIONS D'ENERGIE EOLIENNE

(84) Benannte Vertragsstaaten:
**AT BE CH CY DE DK ES FI FR GB GR IE IT LI LU MC NL PT SE TR**

(30) Priorität: **28.11.2000 DE 10059018**

(43) Veröffentlichungstag der Anmeldung:
**27.08.2003 Patentblatt 2003/35**

(73) Patentinhaber: **Wobben, Aloys**
**26607 Aurich (DE)**

(72) Erfinder: **Wobben, Aloys**
**26607 Aurich (DE)**

(74) Vertreter: **Eisenführ, Speiser & Partner**
**Patentanwälte Rechtsanwälte**
**Postfach 10 60 78**
**28060 Bremen (DE)**

(56) Entgegenhaltungen:
WO-A-01/73518     DE-A- 10 019 362
DE-U- 29 621 449     US-A- 5 187 427
US-A- 5 225 712

- **CARLIN P W: "An Investigation Of The Interaction Of A Wind Farm And A Hawaiian Utility Line" PROCEEDINGS OF THE 25TH INTERSOCIETY, [Online] 12. - 17. August 1990, Seiten 202-206, XP002195327 Energy conversion engineering conference IECEC-90 ISBN: 0-8169-0490-1 Gefunden im Internet: <URL: http://ieeexplore.ieee.org/iel4/5796/16147 /00747951.pdf > [gefunden am 2002-04-08]**
- **PATENT ABSTRACTS OF JAPAN vol. 2000, no. 06, 22. September 2000 (2000-09-22) & JP 2000 078896 A (HITACHI ENGINEERING &AMP;SERVICES CO LTD), 14. März 2000 (2000-03-14)**

**Beschreibung**

Die vorliegende Erfindung betrifft eine Windenergieanlage bzw. einen Windpark bestehend aus einer Vielzahl von Windenergieanlagen.

Document US 5 187 427 offenbart eine Vorrichtung und ein Verfahren zur Kompensation einer mehrphasigen Stromeinspeisuing für reaktive Leistungsschwankungen an einer Wechselstromeinspeisung gemäß dem Stand der Technik.

Windenergieanlagen bzw. ein Windpark bestehend hieraus sind regelmäßig an ein Stromspannungsnetz angeschlossen, in welches der erzeugte elektrische Strom eingespeist bzw. abgegeben wird.

Die Besonderheit der Stromeinspeisung bei Windenergieanlagen besteht darin, dass aufgrund der sehr schwankenden Windverhältnisse auch die eingespeiste Leistung entsprechend schwankt. Dies ist ein großer Unterschied zu Energieerzeugern wie Atomkraftwerken, Wasserkraftwerken, Kohle- oder Erdgaskraftwerken, bei denen möglicherweise über längere Zeiträume zwar auch Schwankungen feststellbar sind, jedoch für relativ kurze Zeiträume keine Leistungsschwankungen gegeben sind. Daher werden auch Atomkraftwerke, Wasserkraftwerke, Erdgaskraftwerke usw. eher zur Bereitstellung der Grundlast eines Netzes herangezogen, während Windenergieanlagen nur in windbeständigen Gebieten in der Lage sind, auch eine Stromgrundlast zur Verfügung zu stellen.

Überall dort, wo also Windenergieanlagen am Netz angeschlossen sind, die vor allem eine sehr wechselhafte Leistungseinspeisung vornehmen, muss auch vom Versorgungsunternehmen (EVO) oftmals eine stabilisierende bzw. stützende Maßnahme für das Netz vorgenommen werden, da seitens der EVO gewünscht wird, dass keinerlei Strom- und Spannungsschwankungen im Netz gegeben sind.

Ziel der vorliegenden Erfindung ist es, die vorgenannten Nachteile zu vermeiden oder zumindestens zu verringern.

Die Aufgabe wird durch eine Windenergieanlage bzw. einen Windpark bestehend aus einer Vielzahl von Windenergieanlagen mit dem Merkmal nach Anspruch 1 gelöst. Vorteilhafte Weiterbildungen sind in den Unteransprüchen beschrieben.

Die Erfindung sieht vor, dass unabhängig vom aktuellen Windangebot und der damit zur Verfügung zu stellenden Wirkleistung der Windenergieanlage stets eine Windenergieanlage bzw. ein Windpark, bestehend aus einer Vielzahl von Windenergieanlagen, eine konstante Scheinleistung in das Netz abgibt.

Diese Scheinleistung berechnet sich nach folgender Formel:

$$S = \sqrt{P^2 + Q^2}$$

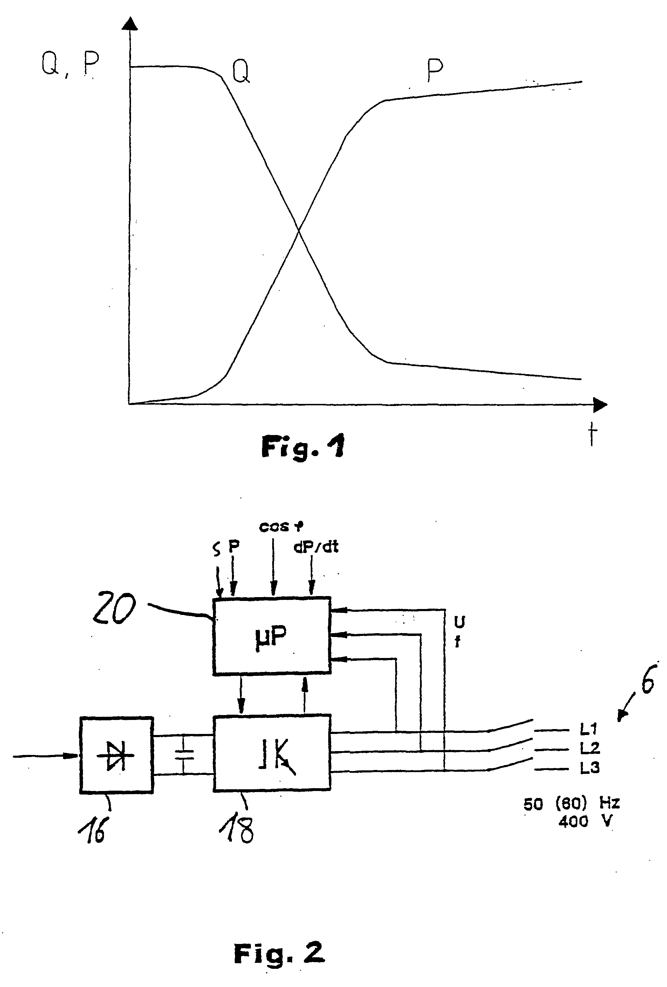

wobei S für die Scheinleistung steht, P für die Wirkleistung und Q für die Blindleistung. Steigt mithin die verfügbare Wirkleistung aufgrund eines entsprechenden Windangebotes an, wird auch der Blindleistungsanteil entsprechend verringert. Dieser Zusammenhang ist aus den beigefügten Figuren 1 und 2 näher zu entnehmen.

Der Vorteil der Erfindung liegt in einer stabilisierenden bzw. stützenden Wirkung auf das Stromversorgungsnetz. Steht z. B. in Folge geringen Windangebots wenig Wirkleistung bereit, kann durch Bereitstellung von Blindleistung die Qualität des Netzes verbessert werden. Daraus ergeben sich wiederum verringerte Spannungsschwankungen, die übrigens durchaus dazu führen können, dass die Abgabe elektrischer Energie in das Netz verringert werden muss, wenn die Spannung im Netz einen oberen Grenzwert erreicht. Der jeweilige Blindleistunganteil kann so eingestellt werden, dass er Kapazität oder Induktiv ist.

Steht ausreichend Wirkleistung bereit, wird diese an das Netz abgegeben und stützt das Netz bei wechselndem Leistungsbedarf. Der verbleibenden Blindleistungsanteil kann wiederum in bekannter Weise als induktive oder kapazitive Blindleistung abgegeben werden.

Die flexible Einstellung des Leistungsgradienten (dP/dt) ermöglicht eine Anpassung an die Aufnahmefähigkeit des Netzes gegenüber schnellen Leistungsänderungen. Auch im Netz mit dominierender Windenergie kann das beschriebenen Scheinleistungsmanagement bereits in der Planungsphase, insbesondere bei erforderlichen Netzverstärkungsmaßnahmen, berücksichtigt werden, um kostensenkende Effekte zu bewirken.

Mit der Erfindung ist es möglich, dass nicht nur das Windangebot einer Windenergieanlage in optimaler Weise genutzt werden und in elektrische Energie umgewandelt werden kann, sondern dass dabei auch Netze nicht nur störungsfrei betrieben werden, sondern in ihrer Leistungsfähigkeit gestützt werden. Damit erhöht sich insgesamt der Qualitätsstandard des eingespeisten Stromes bzw. der gesamten Windenergieanlage, welche auch aktiv zur Netzqualität beiträgt, was durch die erfindungsgemäße Scheinleistungsregelung der Windenergieanlage möglich ist.

Die Erfindung ist nachfolgend anhand eines Ausführungsbeispiels in den Zeichnungen näher erläutert. Es zeigen:

Fig. 1    Ein Blindleistungs-/Wirkleistungszeitdiagramm einer Steuerung einer erfindungsgemäßen Windenergieanlage

Fig. 2    Darstellung einer Blockschaltung einer Regelungseinrichtung einer Windenergieanlage

Fig. 1 zeigt ein Blindleistungs-/Wirkleistungszeitdiagramm einer Regelung gemäß einer erfindungsgemäßen Windenergieanlage. Hierin bedeutet P die Wirkleistung, Q die Blindleistung.

Wie aus dem Diagramm zu erkennen, verhalten sich die Werte für die Wirkleistung wie auch für die Blindleistung jeweils reziprok zueinander, d. h. bei steigender Wirkleistung fällt die Blindleistung ab und umgekehrt.

Die Summe der Quadrate von Wirkleistung und Blindleistung ist hierbei konstant.

Fig. 2 veranschaulicht eine Regelungseinrichtung zur Umsetzung der erfindungsgemäßen Steuerung einer Windenergieanlage. Die Steuer-Regelungseinrichtung der Windenergieanlage weist zunächst einen Gleichrichter (16) auf, in dem die in dem Generator der Windenergieanlage erzeugte Wechselspannung gleichgerichtet wird (Gleichspannungszwischenkreis). Ein mit dem Gleichrichter verbundener Frequenzumrichter wandelt die zunächst im Zwischenkreis gleiche Gleichspannung in eine Wechselspannung um, die als dreiphasige Wechselspannung über die Leitungen L1, L2 und L3 in das Netz eingespeist wird. Der Frequenzumrichter 18 wird mit Hilfe des Mikrocomputers 20, der Teil der gesamten Regelungseinrichtung ist, gesteuert. Hierzu ist der Mikroprozessor mit dem Frequenzumrichter 18 gekoppelt. Als Eingangsgrößen für die Regelung der Spannung als auch der Phase und der Stromlage, mit der die von der Windenergieanlage zur Verfügung gestellte elektrische Energie in das Netz eingespeist wird, sind die Scheinleistung S, die elektrische Leistung P des Generators, der Blindleistungsfaktur cos _ sowie der Leistungsgradient dP/dt. Je nach erzeugter Wirkleistung wird auch die Blindleistung bei einer vorgegebenen Scheinleistung gemäß der Formel

$$S = \sqrt{P^2 + Q^2}$$

eingestellt.

Selbstverständlich ist es auch möglich, die Betriebsart, falls notwendig, zu ändern, wenn es beispielsweise zu besorgen ist, dass die Wirkleistung oder Blindleistung einen bestimmten Wert nicht übersteigen darf. Wird beispielsweise von dem EVO des angeschlossenen Netzes gefordert, dass stets eine bestimmte Menge Blindleistung ins Netz eingespeist wird, muss dies durch eine entsprechende Regelung berücksichtigt werden. Die erfindungsgemäße Einspeisung einer konstanten Scheinleistung in ein Energieversorgungsnetz bzw. das Angebot des Einspeisens einer konstanten Scheinleistung in das Energieversorgungsnetz hat zu Folge, dass bei schwankender Wirkleistung entsprechend die Blindleistung - reziprok zur Wirkleistung - so geregelt wird, dass eine konstante Scheinleistung erhalten wird.

Um bei konstanter Scheinleistung immer noch in das Netz eingreifen zu können, kann natürlich auch die von der Windenergieanlage erzeugte Wirkleistung gezielt verringert werden (z. B. durch Pitchen der Rotorblätter), um so einen höheren (kapazitiven oder auch induktiven) Blindleistungsanteil einspeisen zu können. Durch eine solche Maßnahme kann auch bei einer theoretisch höheren verfügbaren Wirkleistung immer noch das Netz entsprechend positiv beeinflusst werden.

Durch die Erfindung gemäß der vorliegenden Anmeldung ist nicht etwa die Spannungskonstanthaltung vorderstes Ziel, sondern die Netzspannungsbeeinflussung im Sinne des Netzbetreibers. So kann durch die Ergänzung des Wirkleistungsanteils um einen Blindleistungsanteil das Spannungsniveau im Netz auf einen gewünschten Wert angehoben werden. Natürlich sind diese Wirkungen u. a. auch von der Topologie des Netzes abhängig. Bei einem hohen Blindleistungsbedarf in der Nähe der Windenergieanlage muss diese Blindleistung dann jedoch nicht über weite Strecken mit entsprechenden Verlusten durch das Netz transportiert werden, sondern kann durch die Windenergieanlage relativ nah am Verbraucher bereitgestellt werden.

## Patentansprüche

1. Windenergieanlage und/oder Windpark bestehend aus einer Mehrzahl von Windenergienanlagen mit einer Einrichtung zur Regelung (16, 18, 20) der an ein Stromspannungsnetz (L1, L2, L3) abzugebenden Leistung, wobei die Regelung so eingestellt ist, dass stets eine konstante Scheinleistung dem Netz eingespeist wird.

2. Windenergieanlage und/oder Windpark nach Anspruch 1,
   **dadurch gekennzeichnet, dass** die Scheinleistung nach folgender Formel berechnet wird:

$$S = \sqrt{P^2 + Q^2}$$

wobei der S der Betrag der Scheinleistung, P der Betrag der Wirkleistung und Q der Betrag der Blindleistung ist.

## Claims

1. Wind energy installation and/or wind park comprising a plurality of wind energy installations, with a device for regulation (16, 18, 20) of the power to be emitted to an electrical voltage grid system (L1, L2, L3), with the regulation being set such that constant volt-amperes are always fed to the grid system.

2. Wind energy installation and/or wind park according to Claim 1,
   **characterized in that** the volt-amperes are calculated using the following formula:

$$S = \sqrt{P^2 + Q^2}$$

where S is the magnitude of the volt-amperes, P is the magnitude of the power and Q is the magnitude of the wattless component.

## Revendications

1. Installation d'énergie éolienne et/ou parc éolien constitué d'une pluralité d'installations d'énergie éolienne avec un dispositif (16, 18, 20) pour la régulation d'une puissance à injecter dans un réseau de courant et de tension (L1, L2, L3), la régulation étant ajustée de telle façon qu'une puissance apparente constante soit toujours injectée dans le réseau.

2. Installation d'énergie éolienne et/ou parc éolien selon la revendication 1, **caractérisé en ce que** la puissance apparente est calculée d'après la formule suivante :

$$S = \sqrt{P2 + Q2}$$

où S est la valeur de la puissance apparente, P la valeur de la puissance réelle et Q la valeur de la puissance réactive.

**Fig. 1**

**Fig. 2**